# EUROPEAN PATENT SPECIFICATION

(11) **EP 0 790 920 B1**
(45) Date of publication and mention of the grant of the patent: **05.03.2003**
(21) Application number: 95917012.7
(22) Date of filing: 17.04.1995
(51) Int. Cl.: B63C 11/18, B63C 11/24, B01D 53/04

(54) **GAS ABSORBENT REBREATHER CANISTER**
GASABSORBTIONSBEHÄLTER FÜR EIN GERÄT ZUM WIEDEREINATMEN VON AUSGEATMETER LUFT
RECIPIENT AVEC ABSORBEUR DE GAZ PERMETTANT DE RESPIRER EN CIRCUIT FERME

(30) Priority: 15.11.1994 US 340106
(43) Date of publication of application: 27.08.1997
(73) Proprietor: W.L. GORE & ASSOCIATES, INC., Newark, Delaware 19714-9206 (US)
(72) Inventor: MCKENNA, Douglas, B., Dover, DE 19904 (US)
(74) Representative: Le Forestier, Eric
(86) International application number: US9504686
(87) International publication number: WO96015027

(56) References cited:
- WO-A-94/02192
- DE-A- 2 207 017
- DE-A- 4 039 952
- GB-A- 1 429 476
- US-A- 5 165 394

## Description

### FIELD OF THE INVENTION

The present invention relates to an adsorbent system for removing carbon dioxide from expelled air in rebreathing equipment used for sefl-contained underwater diving.

### BACKGROUND OF THE INVENTION

In its simplest form a rebreather is a device that enables a person to retain and reuse some or all of their expired breath. Even with physical exertion, a person uses only a small percentage of the oxygen that is inhaled. A rebreather recirculates unused oxygen in the system and replenishes the oxygen as it is used by the wearer. This allows a very small tank of oxygen to last much longer than is possible using traditional SCUBA (Self Contained Underwater Breathing Apparatus) gear. The three main components of typical rebreather systems are gas supply/oxygen control, counterlung, and carbon dioxide removal.

A rebreather has a carbon dioxide removal system that maintains CO₂ pressures at a safe level. This is relatively easy to do, and is accomplished by passing exhaled gases through a canister filled with a chemical adsorbent, such as soda lime. Several manufacturers make these adsorbents and use their own special mix. For example, SODASORB®, manufactured by W. R. Grace, consists of a mixture of sodium hydroxide, calcium hydroxide and potassium hydroxide. Other adsorbents, such as lithium hydroxide, can be used that can offer improved cold water performance.

Adsorbents are typically in the form of small granules 0.04 to 0.25 inches in diameter, placed in a canister through which exhaled gases are passed. Smaller granules would allow more surface area per unit weight, but because the person must "breathe" through this canister without too much resistance, larger adsorbent particles are employed so as to allow gas flow around these granules, and through the canister with a relatively low pressure drop. Thus, one of the limitations of current adsorbent canisters is the relatively large adsorbent particle size necessary to get low pressure drops and in turn, ease of breathing.

The large adsorbent particle sizes also have less surface area and unit volume than smaller particles and therefore to obtain the same adsorption rate, an adsorber with the large particles must be larger in size than an adsorber with smaller particles. Thus, another disadvantage of current systems is the large canister size which often takes up even more space than the gas bottles of the rebreathers.

The method for filling current CO₂ canisters is by pouring the granules into the canister, and then tapping on the canister to get the granules to settle, leaving enough room for a foam liner, which is commonly later compressed, to prevent granule migration. If too much tapping or compression is administered, the granules will particulate or "dust" as they grind together. If not enough settling of the granules has occurred, the granules may shift during diving and cause "channeling" of expired gases through areas of the canister bed that have fewer granules. Thus, from person to person, because of granule loading technique, reduced efficiency because of "channeling" or dusting, and potential caustic cocktail can occur.

One of the early problems encountered with adsorbent canisters was breathing in of small particles of these adsorbents which damaged the user's lungs and throat. Thus, today's adsorbent granules may have non-adsorbing components designed to minimize friability and particulation. This problem can be solved through the use of hydrophobic inlet and outlet filters on the canisters that filter out any airborne particles. The drawback of using these filters however is the increased breathing resistance. By increasing the filter's surface area, the pressure drop can be minimized, but only at the expense of a larger, space consuming filter, such as a pleated filter element. Thus another limitation of existing canisters is the tradeoff between safety, breathing resistance, and size.

Another more serious problem with rebreather systems is that of flooding the rebreather with water by removal of the mouthpiece, or by failure of other systems. If this occurs, water can get into the adsorbent canister, pickup adsorbent particles, and flow into the user's mouth. This occurrence is referred to as "caustic cocktail" in the industry and is especially dangerous when using lithium based adsorbent materials. Also, the use of check valves and water traps can minimize the risk of caustic cocktail. However, these improved systems, while being safer, have the disadvantage of being harder to breathe through and being bulkier.

U.S. Patent 5,165,399 to Hochberg, discloses a CO₂ absorption means in which an adsorbent is intimately admixed with fibrous material and formed into a sheet. The sheet is bonded to a CO₂ permeable fabric layer to improve the overall strength. The technique disclosed allows CO₂ absorption sheets to be produced that are less likely to particulate, but are not designed to be exposed directly to water.

A similar disclosure is made in U.S. Patent 5,165,394 to Hochberg wherein the CO₂ absorption means is contained within a protective hood.

It is a purpose of the present invention to provide an adsorbent system which ensures that the adsorbent is contained and confined within a gas adsorbing canister.

It is a further purpose of the present invention to provide a rebreathing CO₂ adsorbent system that offers little or no risk of inhalation of adsorbent.

It is still another purpose of the present invention to provide a means for using smaller adsorbent granule size to obtain higher surface area and in turn longer usable life, or smaller canister size.

It is also a purpose of the present invention to provide a canister that can be completely flooded without exposing the adsorbents to water. Thus after purging the canister, it will function normally with no chance of caustic cocktail.

It is yet another purpose of the present invention to provide a CO₂ adsorbent system that offers all of the aforementioned advantages without a penalty of increased pressure drop or system bulk.

It is yet another purpose to provide a rebreather CO₂ adsorbent canister for use in scuba diving equipment.

These and other purposes of the present invention will become evident from review of the following specification.

### SUMMARY OF THE INVENTION

The present invention as defined in the appended claims is an improved gas adsorbent rebreather canister designed to provide efficient adsorption CO₂ while creating a minimum pressure drop for gases passing through. The present invention also provides an air permeable, hydrophobic (liquid-water repellent), water-vapor permeable sheet having an adsorbent material inside which provides excellent adsorption capability along with containment of the adsorbent material within the canister. The water repellent nature of the sheet prevents water, in the event the canister becomes flooded with water, from reaching and contacting the adsorbent material inside the sheet.

In one embodiment, the gas adsorption canister has an inlet, a body, and an outlet, in which the canister body contains at least one sheet and preferably a plurality of sheets containing adsorbent material. The sheet is positioned inside the canister, and is arranged such that gas entering the inlet passes substantially parallel with one surface of the sheet. The sheet is porous so that CO₂ can diffuse into the sheet and contact the adsorbent material. But the pores are small enough that liquid-water cannot penetrate into the sheet and contact the adsorbent material.

Preferably, the canister will contain a number of such parallel sheets. At least a portion of the multiple number of sheets are spaced apart by a separating means to enhance gas flow along the adsorbent sheet. In one embodiment, the separating means can be a separating screen positioned between the sheets. The separating means can also be a potting material attaching the sheet to the canister wall.

The sheets containing the adsorbent material can be formed in several ways. First, the sheets can be formed of an internal screen positioned between two hydrophobic, liquid-water repellent, gas-permeable membranes or films with the adsorbent material positioned within voids between the screen members. In another embodiment an internal screen is surrounded by adsorbent material and two hydrophobic, liquid-water repellent, gas-permeable membranes or films are placed over the adsorbent material. In a third embodiment, the sheets are formed of a porous hydrophobic, liquid-water repellent membrane, such as expanded porous polytetrafluoroethylene (PTFE) having a microstructure of nodes interconnected with fibrils in which the sheet contains a gas adsorbing material. In a fourth embodiment, the sheet is formed of a porous liquid-waterproof membrane filled with a gas adsorbing material which is covered on each side by another porous membrane. These configurations all effectively contain the adsorption material within the canister when exposed to gas and water and allow efficient adsorption at a low pressure drop.

In one of its simplest forms the CO₂ removal system of the present invention comprises a canister which contains many individual layers in which the chosen chemical adsorbent has been encapsulated in a waterproof, gas permeable membrane that has a high degree of particulate filtration efficiency. Exhaled air flows into the cartridge and past (as opposed to through) these membranes.

This construction provides many distinct advantages over previous CO₂ removal canister constructions. First, by encapsulating the chemical adsorbent in a membrane that has a high degree of particulate efficiency, there is little or no chance of any particles being breathed in by the user. Second, because the membrane is hydrophobic, liquid water is not able to penetrate the membrane and mix with the chemical adsorbent, thereby preventing the "caustic cocktail" potential. Third, because the membrane is gas permeable, exhaled C0₂ can easily pass through and be adsorbed by the chosen chemical adsorbent. Fourth, very small (.05 inch and smaller) adsorbent particles can be encapsulated, thereby dramatically increasing the effective adsorbent surface area. Finally, and most importantly, because exhaled gases flow past these membranes and not through them, the pressure drop through the canister is very low, thereby providing the user with a system that is easy to breathe through.

The gas adsorbent canisters of the present invention adsorb CO₂ and are useful as underwater diving rebreathers.

### BRIEF DESCRIPTION OF THE DRAWINGS

Figure 1a is a perspective view of square shaped gas adsorption canister of the invention.

Figure 1b is a side view of the embodiment of Figure 1a.

Figure 2 is a cross-sectional view of parallel aligned sheets taken along 2-2 of Figure 1b.

Figure 3 is an enlargement of the circular area of the cross-section shown in Figure 2.

Figure 4 is a cross-sectional view of a canister of the present invention having a pleated sheet.

Figure 5 is a three dimensional view of an adsorption canister of the present invention where the canister is cylindrical and the sheets are spiral.

Figure 6 is a cross-sectional top view of the adsorption canister of Figure 5 where the sheets inside the canister have a spiral configuration.

Figure 7 is an enlargement of the circular area of the cross-section shown in Figure 6 showing the sheets separated by a separating means.

Figure 8 is a cross-sectional view of an adsorption sheet of the present invention where the sheet is formed of expanded polytetrafluoroethylene with adsorbent particles encapsulated within.

Figure 9 is a cross-sectional view of an adsorption sheet of the present invention where the sheet of Figure 8 is surrounded by an outer membrane.

Figure 10 is a cross-sectional view of an adsorption sheet of the present invention where adsorbent material is attached to an internal screen and outer membranes are attached to the adsorbent particles.

Figure 11 is a cross-sectional view of an adsorption sheet of the present invention where outer membranes are attached to an internal screen and the interstices in the screen contain adsorbent material.

Figures 12 through 15 are three-quarter elevation views of a method for forming the sheet of Figure 11.

Figure 16 is a cut-away view of the canister of Figure 1 and depicts a diffusion panel that redistributes gas flow equally across the canister cross section.

### DETAILED DESCRIPTION OF THE INVENTION

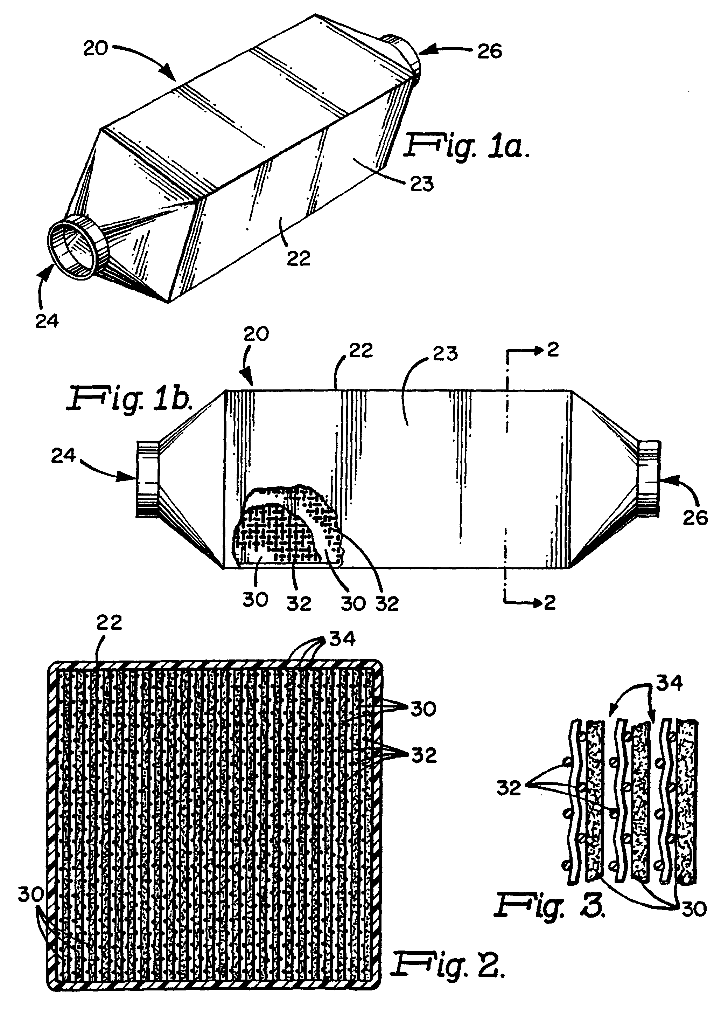

The present invention provides a gas adsorbent rebreather canister which is designed to provide efficient adsorption, uniform depletion of adsorption material, containment of the adsorbent material even when exposed directly to liquid water, and a minimum pressure drop for gases passing through, particularly in scuba diving equipment. As the mechanism for removing CO₂ from a gas is dependent on the particular material chosen, the use of the word adsorption in this specification is meant to include adsorption, absorption, and chemisorption. In Figures 1a and 1b, an improved gas adsorbent canister device, indicated generally at 20, comprises wall 22 which defines a hollow canister body 23 that has a gas inlet 24 and outlet 26. The canister 22 can be of any shape, but preferably is rectangular or cylindrical. The canister can be composed of a rigid material, such as glass fiber reinforced plastic. As is illustrated in Figures 2 and 3, the inside hollow portion of the canister contains porous, liquid-water resistant, air permeable sheets 30 which contain an adsorbent material. These sheets 30 are aligned parallel to the direction of gas flow and run substantially the length of the canister body. Expired gases pass through the inlet 24 of the gas absorption canister 20, through the space 34 between the sheets 30, and out through the outlet 26. As expired gases flow past these adsorbent sheets, certain gases will diffuse into said sheets and react with or be adsorbed by adsorbents contained therein. Since the sheet surfaces are aligned parallel to the gas flow, a controlled and lower pressure drop is maintained, as well as uniform flow past all sheets, allowing for efficient adsorption and a uniform depletion of the adsorbent contained in the sheets 30.

As shown in Figure 2, the canister 22 contains a plurality of porous hydrophobic, gas-permeable adsorbent sheets 30 which are aligned so that the gas flows substantially parallel to the sheet 30 surfaces. In this embodiment, the canister body 22 has a rectangular cross-section. The sheets 30 are spaced apart from each other by separating screens 32. Figure 3 shows a detailed view of circular section 90 and depicts the adsorbent sheets 30 and separating screens 32 where the separating screens 32 are positioned between the sheets 30.

The separating screen 32 and sheets 30 are held in position parallel to the gas flow through the canister. The separating screen 32 and sheets 30 may be directly attached to the canister wall 22 or may be indirectly attached by use of a frame or other device which is attached to the canister wall, or may be held in place by the internal shape of the canister.

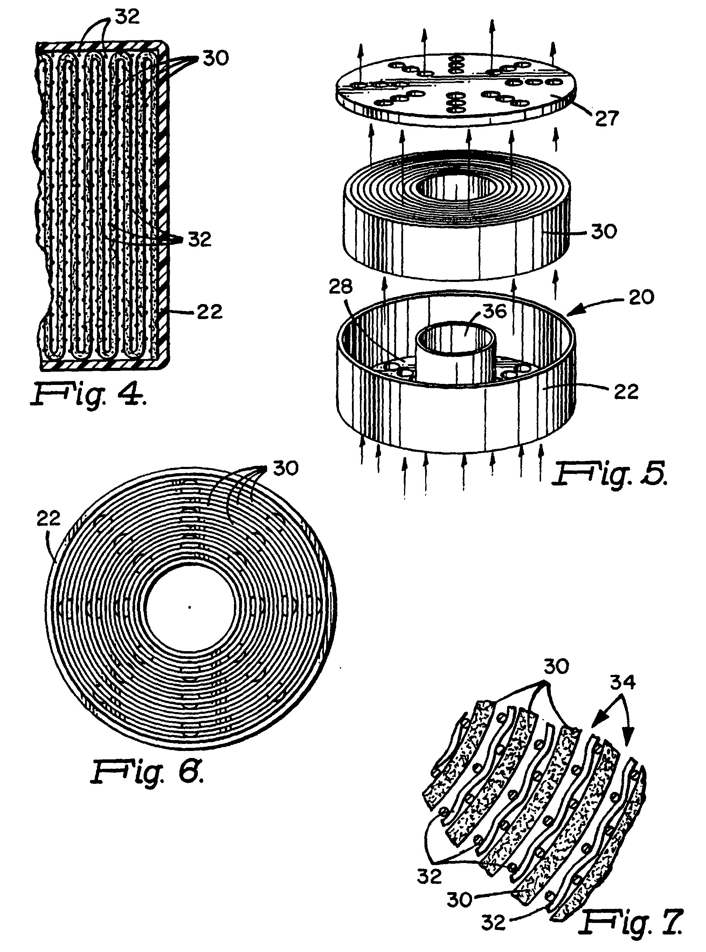

Figure 4 shows another embodiment taken along line 2-2 of Figure 1b where a rectangular canister body 22 contains a sheet 30 which is "pleated" and portions of the pleated sheet are spaced apart by separating screens 32. The separating screens 32 need not be attached to the canister body 22 or to the sheet 30.

As illustrated in Figure 5, in another embodiment of the present invention, the canister 20 can have a circular or cylindrical shape. The canister can have an opening 36 in the middle giving the canister a donut shape or the canister can be solid. In the embodiment depicted, the sheets 30 are spiraled. Air flow through the cylindrical canister body 22 is from bottom to top as indicated on Figure 5 and is parallel to the spiraled adsorbent sheet surfaces. Flow is through end plates 27 and 28. Figure 6 shows a top view of cylindrical canister 20 of Figure 5 with adsorbent sheet 30 arranged within the canister 22 in the "spiral" configuration where the sheet is wrapped around the center. Figure 7 shows separating screens 32 positioned between the spirally positioned sheets 30.

The flow rate of expired gas through the canister is controlled by the total space between the adsorbent sheets. Accordingly, a canister with a larger cross-sectional area or a thicker separating means, would have the effect of reducing the velocity of gas flow past the adsorbent sheets. This velocity must be matched with the length of the canister to achieve the desired absorption rate for a particular application and adsorbent material.

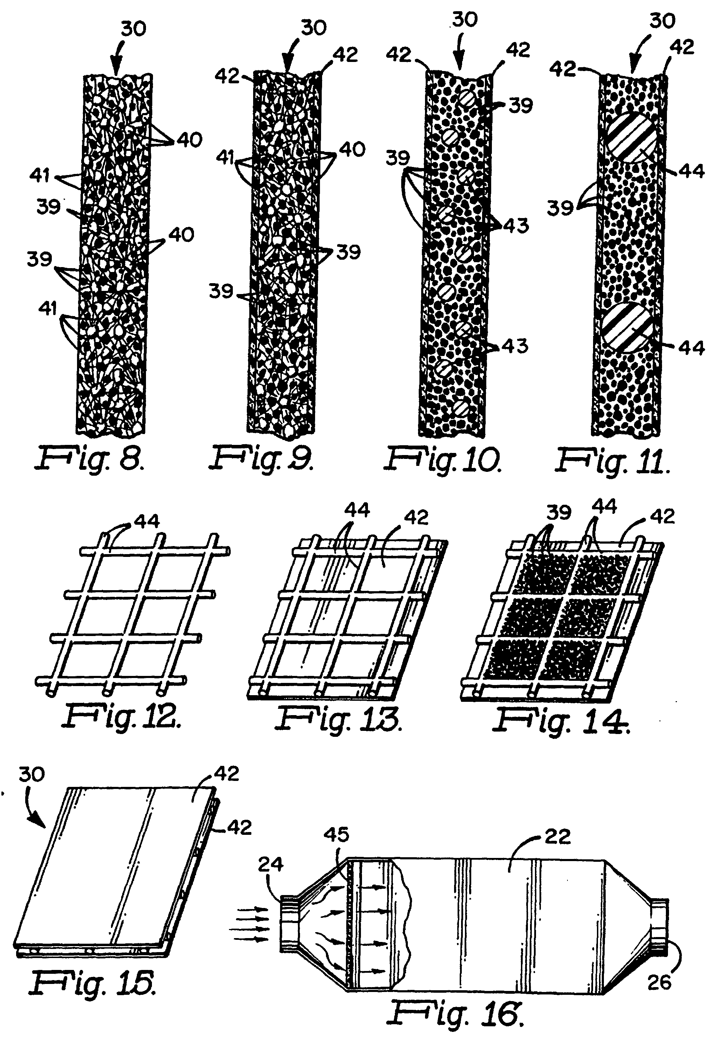

The present invention also provides a gas adsorbent sheet 30 which provides isolation of the adsorbent from the user in wet and dry environments. The sheets 30 are constructed to contain adsorbent particles within and to withstand exposure to vibration, air, and water without releasing the adsorbent particles. Four embodiments of sheets 30 are shown in Figures 8, 9, 10, and 11.

In one embodiment shown in Figure 8, sheet 30 is formed of an adsorbent filled expanded porous PTFE sheet having a microstructure of nodes 40 interconnected with fibrils 41 wherein adsorbent material 39 is present in the voids of the PTFE structure as taught by U.S. Patent No. 4,985,296 issued to Mortimer, Jr., incorporated by reference. This sheet is water repellent, but air-permeable. Ideally, particles 39 are packed in a multi-modal (e.g., bi-modal or tri-modal) manner, with particles of different sizes interspersed around one another to fill as much of the available void space between particles as is possible so as to maximize the amount of active material contained in the sheet. This technique also allows more than one type of adsorbent particle to be filled into a single sheet. Also, because very small particles (< 50 microns), the surface area available for CO₂ absorption is tremendous when compared with the use of even small granules (#12 mesh).

By using filled expanded porous polytetrafluoroethylene (ePTFE) as sheet 30, a number of additional advantages are further imparted. ePTFE is a non-linting, non-out-gassing inert material that effectively reduces dusting of adsorbent material during manufacturing and during the life of the filter. Additionally, processing advantages of this material include the ability to make a relatively thin, highly loaded material that can be produced in a wide sheet and then cut (or cut and pleated) into desired configurations.

An advantage of using an adsorbent filled PTFE sheet is the sheet's capacity to achieve high adsorbent loading densities. By controlling the adsorbent particle sizes and by compression of the extruded sorbent filled PTFE sheet, very high density adsorbent loadings can be achieved. The PTFE structure still allows gases to diffuse into and react with the adsorbent particles even in very densely packed formulations.

The properties of CO₂ adsorbent filled ePTFE sheet are such that no other supporting fabric or material is needed to maintain structural integrity. In fact, not only can this filled ePTFE sheet withstand flexing, pleating and mechanical vibration under dry conditions, the hydrophobicity of the ePTFE offers this structural durability even while subjected to direct liquid water contact, without water ever mixing with the CO₂ adsorbent. Thus, this preferred embodiment of sheet 30 is ideal to prevent the "caustic cocktail" problem.

The particular adsorbent material or particle 39 used in the sheet of the invention depends on the particular gas being adsorbed. To adsorb CO₂ gas, adsorbent material 39 may comprise calcium hydroxide, sodium hydroxide, potassium hydroxide, lithium hydroxide (LiOH) and mixtures thereof or other Group IA and IIA metal hydroxides as well as polymer adsorption materials. By "particle" is meant individual particles of any aspect ratio and thus includes fibers and powders.

Another preferred embodiment of the sheet 30 is shown in Figure 9, where the filled ePTFE sheet 30 is encapsulated between two hydrophobic gas-permeable membranes 42. These outer membranes 42 add extra protection to ensure that the adsorption material 40 is contained within the sheet 30 while preventing water from reaching the adsorbent contained in the sheet. The membranes 42 must have a high degree of filtration efficiently to prevent adsorbent particles from escaping into the breathing gas circuit. These membranes 42 are preferably comprised of porous expanded polytetrafluoroethylene (ePTFE), because it is hydrophobic and offers a high particulate filtration efficiency. Additionally, PTFE provides a number of improved processing advantages, such as being able to be formed in extremely thin dimensions while remaining coherent and pin-hole free, and being able to be made into wide widths that can be slit to the desired width. The thinner the membrane the greater the filter adsorbtion rate in a given volume. As such, these outer membranes are very thing and are not used to add any structural integrity but are for filtration and hydrophobicity only. The outer membranes 42 can be attached to the sheet 30 by a thermoplastic adhesive polymer. With the additional protection of these outer layers of ePTFE, the use of more hazardous CO₂ adsorbents is contemplated.

A third embodiment of the sheet is shown in cutaway Figure 10 where an internal screen 44 is encapsulated by adsorbent material 39 which is surrounded by two hydrophobic gas-permeable membranes 42.

A fourth embodiment of the sheet 30 is shown in Figure 11 where an internal screen 44 is attached to two hydrophobic gas-permeable membranes 42 and the adsorbent material 39 is positioned in the voids between the screen members 44.

Figures 12 thorough 15 illustrate a method for making the sheet 30 of Figure 11 having an internal screen 44, adsorbent material 40, and outer membranes 42. Figure 12 depicts the internal screen 44. Next, in Figure 13, internal screen 44 is attached to a membrane 42 by a lamination process. Subsequently, in Figure 14, adsorbent material 39 is added into the open cells of internal screen 44.. Afterwards, in Figure 15, a second membrane 42 is laminated to the top of the internal screen 44 thereby encapsulating the adsorbent material 40 within.

In another preferred embodiment of the present invention, shown in Figure 16, a gas diffusion panel 45 is placed upstream of adsorbent sheets 30. The diffusion panel 45 acts to redistribute the gases flowing through the canister 20 such that gases flow evenly between all adsorbent sheets 30. This redistribution of gas occurs because of the pressure drop across the diffusion panel 45. The diffusion panel is comprised of a flat sheet that can be made out of any porous material such as sintered plastics or metals, woven and nonwoven synthetic or natural fabrics, etc. The gas diffusion panel 45 is preferably not hydrophobic to the extent that if water enters the canister 20, it will be able to flow through the diffusion panel without building up any significant pressure. Through the use of this diffusion panel, the amount of gas flowing past each individual sheet 30, is largely determined by the uniformity of the diffusion panel 45. This, in addition to the precise sheet 30 spacing via separating screens 32 with uniform thickness, allows for excellent uniformity in flow, and in turb, adsorbent reaction, and utilization of the canisters 20 internal dimensions.

The rebreather canister of the present invention provides many distinct advantages over previous adsorbent canister constructions. The present invention provides an adsorbent sheet which provides excellent containment of the adsorbent within the sheet even when exposed to water and vibration at high pressures. The alignment of the adsorbing sheet such that gas flows parallel to the sheet surface, in addition to a gas diffusion panel, provides efficient adsorption while creating a minimum pressure drop for gases passing through. These advantages of safety efficiency, and reduced breathing resistance of the present invention are all apparent without any penalty in size or bulk of the canister.

For these reasons the canister of the present invention is considered to be a major advancement in the art of rebreather canisters for use in scuba diving equipment, and is expected to help resolve the safety issues associated with CO₂ absorption in rebreathers.

### Example 1

Components:
1. Empty CO₂ MK16 rebreather canister made by Carlton.
2. Polypropylene screen: .25 inch square cell, .06 inch thick, manufactured by Intermet Company.
3. GORE-TEX® membrane: .5 mil thick, gas flow rate of 18 cfm at .5 inch pressure drop, W. L. Gore & Associates, Inc.
4. Polypropylene separating screen: .034 inches thick Naletex obtained from Nahle Plastics. Co.
5. Partially reticulated polyester foam .25 inches thick.
6. SODASORB fines, manufactured by W. R. Grace (CO₂ adsorbent).

The SODASORB® fines are first sieved to remove any granules larger than mesh size 20. Water is then added to the fines to reach a 15% by wt. water content.

GORE-TEX® membrane is laminated to one side of the 0.25 inch polypropylene cell screen in a continuous fashion by using a heated roll that transfers heat through the GORE-TEX membrane, and melts the polypropylene surface in contact with the membrane and is then collected on a roll. This roll is then payed off with the screen side up, while the SODASORB® fines are spread into the screening cells with a spreader bar. A second layer of GORE-TEX ® membrane is then laminated to the .25 inch screening thus encapsulating the SODASORB ® fines in between the screening cells. This composite is then slit to the proper width - in this case 2.875 inches. The separating screen is slit to the same width, and the composite and Naletex polypropylene screen are rolled up together in a shape that resembles a 2.875 inch thick doughnut. The 0.25 inch polyester foam is wrapped around the outside and inside perimeter of the doughnut, and the assembly is placed into the canister. Gas flows in through the flat bottom of the canister, up and in between the adsorbent layers and out the top. The foam prevents expired gases from channeling along the inside or outside perimeter of the cartridge. The empty MK16 canister already had a suitable gas diffusion panel which was intended to prevent granule migration on the inlet side. Thus the distribution of expired gases through the canister is controlled by the uniformity of the inlet diffusion panel as opposed to the haphazard gas channels created by adjacent granules in typical granular bed canisters.

While particular embodiments of the present invention have been illustrated and described herein, the present invention should not be limited to such illustrations and descriptions. It should be apparent that changes and modifications may be incorporated and embodied as part of the present invention within the scope of the following claims.

## Claims

1. A gas absorbent rebreather system (20) for use in a self-contained breathing apparatus that comprises :
a canister body (23) ;
a gas absorbent material (39) formed into an air permeable and liquid-water resistant sheet (30) that prevents migration of gas absorbent material from the canister body in the event that water passes through the canister body;
wherein the sheet is mounted in the canister body so as to allow air flow through the canister body to interact with the gas absorbent material within the sheet.

2. The rebreather system of claim 1 wherein the gas absorbent material and sheet are pre-formed into a cartridge for readily installation into the canister body.

3. The rebreather system of claim 1 wherein the sheet (30) is arranged in multiple layers and an air-flow gap is provided between the layers.

4. The rebreather system of claim 3 wherein the air-flow gap is provided by a screen (32; 44) mounted between the layers of the sheet (30).

5. The rebreather system of claim 1 wherein gas absorbent material (39) is embedded within the sheet.

6. The rebreather system of claim 1 wherein the gas absorbent material and sheet are spirally wrapped into a cartridge.

7. The rebreather system of claim 1 wherein the sheet (30) comprises a filled expanded polytetrafluoroethylene within a microporous membrane (42).

8. The rebreather system of claim 7 wherein the microporous membrane (42) comprises expanded polytetrafluoroethylene.

9. The rebreather system of claim 1 wherein the absorbent material (39) is selected from the group consisting of calcium hydroxide, sodium hydroxide, potassium hydroxide, lithium hydroxide (LiOH) and mixtures thereof.

10. The rebreather system of claim 1 wherein the system includes a diffusion panel (45).

11. The rebreather system of claim 1 wherein the sheet is arranged in multiple layers, and at least one separating element (32) is provided between the layers.

12. The rebreather system of claim 1 wherein the absorbent (39) comprises one selected from the group consisting of Group IA and IIA metal hydroxides.

13. The rebreather system of claim 1 wherein the absorbent (39) comprises calcium hydroxide.

14. The rebreather system of claim 1 wherein the absorbent (39) comprises lithium hydroxide.

15. A gas absorbent rebreather system employing a canister body (23) for holding gas absorbent material that comprises:
a carbon dioxide gas absorbent material (39) formed into a sheet (30) that prevents releasing carbon dioxide gas absorbent particles;
the sheet being pre-formed into a cartridge for ready installation into the canister body;
wherein the sheet is arranged in multiple layers and at least one air-flow gap is provided between the layers; and
wherein the cartridge is proportioned to orient the sheet within the canister body so as to direct air flow through at least one air-flow gap to interact with the gas absorbent material in the sheet.

16. The rebreather system of claim 15 wherein the sheet (30) is selected for preventing migration of carbon dioxide gas absorbent material from the canister body (23) in the event that water passes through the canister body.

17. The rebreather system of claim 15 wherein the air-flow gap is provided by a screen (32) mounted between the layers of the sheet.

18. The rebreather system of claim 15 wherein gas absorbent material (39) is embedded within the sheet.

19. The rebreather system of claim 15 wherein the gas absorbent material (39) and sheet (30) are spirally wrapped into a cartridge.

20. The rebreather system of claim 15 wherein the gas absorbent material is formed into a microporous membrane (42).

21. The rebreather system of claim 20 wherein the microporous membrane (42) comprises expanded polytetrafluoroethylene.

22. The rebreather system of claim 15 wherein the system includes a diffusion panel (45).

23. The rebreather system of claim 15 wherein the sheet is arranged in multiple layers, and at least one separating element (32) is provided between the layers.

24. The rebreather system of claim 15 wherein the sheet (30) is air permeable and liquid-water resistant such that migration of carbon dioxide absorbent material (39) from the cartridge is prevented in the event that water passes through the cartridge.

25. The rebreather system of claim 15 wherein the carbon dioxide absorbent (39) comprises one selected from the group consisting of group IA and IIA metal hydroxides.

26. The rebreather system of claim 15 wherein the carbon dioxide absorbent (39) comprises calcium hydroxide.

27. The rebreather system of claim 15 wherein the carbon dioxide absorbent (39) comprises lithium hydroxide.

## Patentansprüche

1. Gasabsorbiersystem (20) für ein Gerät zum Wiedereinatmen von ausgeatmeter Luft zum Gebrauch einer in sich geschlossenen Atmungsvorrichtung, das aufweist:
einen Behälterkörper (23);
ein gasabsorbierendes Material (39), das in einer luftdurchlässigen und flüssigwasser-resistenten Folie (30) ausgebildet ist, die eine Migration des gasabsorbierenden Materials von dem Behälterkörper verhindert, falls Wasser durch den Kanisterkörper gelangt;
wobei die Folie in dem Behälterkörper derart montiert ist, daß sie einem Luftstrom durch den Behälterkörper gestattet, mit dem gasabsorbierenden Material innerhalb der Folie zu wechselwirken.

2. System für ein Gerät zum Wiedereinatmen von ausgeatmeter Luft nach Anspruch 1, bei welchem das gasabsorbierende Material und die Folie als Patrone vorgefertigt sind zur leichten Anbringung in dem Behälterkörper.

3. System für ein Gerät zum Wiedereinatmen von ausgeatmeter Luft nach Anspruch 1, bei welchem die Folie (30) in mehreren Schichten angeordnet ist und zwischen den Schichten ein Spalt für einen Luftstrom vorgesehen ist.

4. System für ein Gerät zum Wiedereinatmen von ausgeatmeter Luft nach Anspruch 3, bei welchem der Spalt für den Luftstrom vorgesehen ist mit Hilfe einer Trennwand (32; 44), die zwischen den Schichten aus Folie (30) montiert ist.

5. System für ein Gerät zum Wiedereinatmen von ausgeatmeter Luft nach Anspruch 1, bei welchem gasabsorbierendes Material (39) innerhalb der Folie eingebettet ist.

6. System für ein Gerät zum Wiedereinatmen von ausgeatmeter Luft nach Anspruch 1, bei welchem das gasabsorbierende Material und die Folie spiralförmig in eine Patrone gewickelt sind.

7. System für ein Gerät zum Wiedereinatmen von ausgeatmeter Luft nach Anspruch 1, bei welchem die Folie (30) ein gefülltes, gestrecktes bzw. geschäumtes Polytetrafluorethylen innerhalb einer mikroporösen Membran (42), aufweist.

8. System für ein Gerät zum Wiedereinatmen von ausgeatmeter Luft nach Anspruch 7, bei welchem die mikroporöse Membran (42) gestrecktes Polytetrafluorethylen umfaßt.

9. System für ein Gerät zum Wiedereinatmen von ausgeatmeter Luft nach Anspruch 1, bei welchem das absorbierende Material (39) ausgewählt ist aus der Gruppe bestehend aus Calciumhydroxid, Natriumhydroxid, Kaliumhydroxid, Lithiumhydroxid (LiOH) und deren Gemische.

10. System für ein Gerät zum Wiedereinatmen von ausgeatmeter Luft nach Anspruch 1, bei welchem das System eine Diffusionswand (45) umfaßt.

11. System für ein Gerät zum Wiedereinatmen von ausgeatmeter Luft nach Anspruch 1, bei welchem die Folie in mehreren Schichten angeordnet ist und wenigstens ein Trennelement (32) zwischen den Schichten vorgesehen ist.

12. System für ein Gerät zum Wiedereinatmen von ausgeatmeter Luft nach Anspruch 1, bei welchem das Absorbens (39) eines umfasst, das ausgewählt ist aus der Gruppe bestehend aus Gruppe IA und IIA Metallhydroxiden.

13. System für ein Gerät zum Wiedereinatmen von ausgeatmeter Luft nach Anspruch 1, bei welchem das Absorbens (39) Calciumhydroxid umfaßt.

14. System für ein Gerät zum Wiedereinatmen von ausgeatmeter Luft nach Anspruch 1, bei welchem das Absorbens (39) Lithiumhydroxid umfaßt.

15. Gasabsorbierendes System für ein Gerät zum Wiedereinatmen von ausgeatmeter Luft, das einen Behälterkörper (23) zum Halten von gasabsorbierendem Material verwendet, das aufweist:
ein Kohlendioxidgas absorbierendes Material (39), das in einer Folie (30) ausgebildet ist, die ein Freisetzen von Kohlendioxidgas absorbierender Partikel verhindert;
wobei die Folie vorgeformt ist in einer Patrone zwecks leichter Anbringung in dem Behälterkörper;
wobei die Folie in mehreren Schichten angeordnet ist und wenigstens ein Spalt für einen Luftstrom zwischen den Schichten vorgesehen ist; und
wobei die Patrone derart proportioniert ist, daß sie die Folie innerhalb des Behälterkörpers derart orientiert, daß ein Luftstrom durch wenigstens einen Luftstromspalt gerichtet wird, um mit dem gasabsorbierenden Material in der Folie zu wechselwirken.

16. System für ein Gerät zum Wiedereinatmen von ausgeatmeter Luft nach Anspruch 15, bei welchem die Folie (30) derart gewählt ist, daß sie eine Migration von kohlendioxidgasabsorbierendem Material aus dem Behälterkörper (23) in dem Fall verhindert, daß Wasser durch den Behälterkörper gelangt.

17. System für ein Gerät zum Wiedereinatmen von ausgeatmeter Luft nach Anspruch 15, bei welchem der Spalt für den Luftstrom vorgesehen ist durch eine Wand (32), die zwischen den Schichten an Folien montiert ist.

18. System für ein Gerät zum Wiedereinatmen von ausgeatmeter Luft nach Anspruch 15, bei welchem gasabsorbierendes Material (39) innerhalb der Folie eingebettet ist.

19. System für ein Gerät zum Wiedereinatmen von ausgeatmeter Luft nach Anspruch 15, bei welchem das gasabsorbierende Material (39) und die Folie (30) spiralförmig in eine Patrone gewickelt sind.

20. System für ein Gerät zum Wiedereinatmen von ausgeatmeter Luft nach Anspruch 15, bei welchem das gasabsorbierende Material in einer mikroporösen Membran (42) ausgebildet ist.

21. System für ein Gerät zum Wiedereinatmen von ausgeatmeter Luft nach Anspruch 20, bei welchem die mikroporöse Membran (42) gestrecktes Polytetrafluorethylen umfaßt.

22. System für ein Gerät zum Wiedereinatmen von ausgeatmeter Luft nach Anspruch 15, bei welchem das System eine Diffusionswand (45) aufweist.

23. System für ein Gerät zum Wiedereinatmen von ausgeatmeter Luft nach Anspruch 15, bei welchem die Folie in mehreren Schichten angeordnet ist und wenigstens ein Trennelement (32) zwischen den Schichten vorgesehen ist.

24. System für ein Gerät zum Wiedereinatmen von ausgeatmeter Luft nach Anspruch 15, bei welchem die Folie (30) luftdurchlässig und Flüssigwasser resistent ist, derart, daß eine Migration von Kohlendioxid absorbierendem Material (39) von der Patrone verhindert wird, im Falle, daß Wasser durch die Patrone gelangt.

25. System für ein Gerät zum Wiedereinatmen von ausgeatmeter Luft nach Anspruch 15, bei welchem das Kohlendioxidabsorbens (39) eines umfaßt, das ausgewählt ist aus der Gruppe bestehend aus Gruppe IA und IIA Metallhydroxiden.

26. System für ein Gerät zum Wiedereinatmen von ausgeatmeter Luft nach Anspruch 15, bei welchem das Kohlendioxidabsorbens (39) Calciumhydroxid umfaßt.

27. System für ein Gerät zum Wiedereinatmen von ausgeatmeter Luft nach Anspruch 15, wobei das Kohlendioxidabsorbens (39) Lithiumhydroxid umfaßt.

## Revendications

1. Système avec absorbeur de gaz permettant de respirer en circuit fermé (20) à utiliser dans un appareil respiratoire autonome comprenant :
une boîte filtrante (23) ;
un matériau absorbant les gaz (39) formé en une feuille (30) perméable à l'air et résistante à l'eau liquide qui empêche la migration du matériau absorbant les gaz hors de la boîte filtrante si l'eau traverse la boîte filtrante ;
dans lequel la feuille est installée dans la boîte de façon à permettre à l'air de traverser la boîte filtrante pour interagir avec le matériau absorbant les gaz à l'intérieur de la feuille.

2. Système permettant de respirer en circuit fermé selon la revendication 1, dans lequel le matériau absorbant les gaz et la feuille sont préformés en une cartouche afin de faciliter leur installation dans la boîte filtrante.

3. Système permettant de respirer en circuit fermé selon la revendication 1, dans lequel la feuille (30) est agencée en couches multiples et un intervalle de circulation d'air est prévu entre les couches.

4. Système permettant de respirer en circuit fermé selon la revendication 3, dans lequel l'intervalle de circulation d'air est constitué par un écran (32, 44) installé entre les couches de la feuille (30).

5. Système permettant de respirer en circuit fermé selon la revendication 1, dans lequel le matériau absorbant les gaz (39) est noyé dans la feuille.

6. Système permettant de respirer en circuit fermé selon la revendication 1, dans lequel le matériau absorbant les gaz et la feuille sont enveloppés en spirale en une cartouche.

7. Système permettant de respirer en circuit fermé selon la revendication 1, dans lequel la feuille (30) comprend un polytétrafluoroéthylène expansé chargé situé à l'intérieur d'une membrane microporeuse (42).

8. Système permettant de respirer en circuit fermé selon la revendication 7, dans lequel la membrane microporeuse (42) comprend du polytétrafluoroéthylène expansé.

9. Système permettant de respirer en circuit fermé selon la revendication 1, dans lequel le matériau absorbant (39) est sélectionné dans le groupe composé de l'hydroxyde de calcium, de l'hydroxyde de sodium, de l'hydroxyde de potassium, de l'hydroxyde de lithium (LiOH) et des mélanges de ces composants.

10. Système permettant de respirer en circuit fermé selon la revendication 1, dans lequel le système comprend un panneau de diffusion (45).

11. Système permettant de respirer en circuit fermé selon la revendication 1, dans lequel la feuille est agencée en couches multiples et au moins un élément de séparation (32) est prévu entre les couches.

12. Système permettant de respirer en circuit fermé selon la revendication 1, dans lequel l'absorbant (39) comprend un hydroxyde choisi parmi le groupe d'hydroxydes de métal des groupes IA et IIA.

13. Système permettant de respirer en circuit fermé selon la revendication 1, dans lequel l'absorbant (39) comprend de l'hydroxyde de calcium.

14. Système permettant de respirer en circuit fermé selon la revendication 1, dans lequel l'absorbant (39) comprend de l'hydroxyde de lithium.

15. Système avec absorbeur de gaz permettant de respirer en circuit fermé utilisant une boîte filtrante (23) pour maintenir le matériau absorbant les gaz, lequel comprend :
un matériau absorbant le gaz carbonique (39) formé en une feuille (30) qui empêche le rejet de particules absorbant le gaz carbonique ;
la feuille étant préformée en une cartouche pour faciliter son installation dans la boîte filtrante ;
dans lequel la feuille est agencée en couches multiples et au moins un intervalle de circulation d'air est prévu entre les couches ; et
dans lequel la cartouche est proportionnée de façon à orienter la feuille à l'intérieur de la boîte filtrante afin de faire traverser au flux d'air au moins un intervalle de circulation d'air pour qu'il interagisse avec le matériau absorbant les gaz dans la feuille.

16. Système permettant de respirer en circuit fermé selon la revendication 15, dans lequel la feuille (30) est choisie afin d'empêcher la migration du gaz carbonique hors de la boîte filtrante (23) si l'eau traverse la boîte filtrante.

17. Système permettant de respirer en circuit fermé selon la revendication 15, dans lequel l'intervalle de circulation d'air est constitué par un écran (32) installé entre les couches de la feuille.

18. Système permettant de respirer en circuit fermé selon la revendication 15, dans lequel le matériau absorbant les gaz (39) est noyé dans la feuille.

19. Système permettant de respirer en circuit fermé selon la revendication 15, dans lequel le matériau absorbant les gaz (39) et la feuille (30) sont enveloppés en spirale en une cartouche.

20. Système permettant de respirer en circuit fermé selon la revendication 15, dans lequel le matériau absorbant les gaz est formé en une membrane microporeuse (42).

21. Système permettant de respirer en circuit fermé selon la revendication 20, dans lequel la membrane microporeuse (42) comprend du polytétrafluoroéthylène expansé.

22. Système permettant de respirer en circuit fermé selon la revendication 15, dans lequel le système comprend un panneau de diffusion (45).

23. Système permettant de respirer en circuit fermé selon la revendication 15, dans lequel la feuille est agencée en couches multiples et au moins un élément de séparation (32) est prévu entre les couches.

24. Système permettant de respirer en circuit fermé selon la revendication 15, dans lequel la feuille (30) est perméable à l'air et résistante à l'eau liquide de façon à empêcher la migration du matériau absorbant le gaz carbonique (39) hors de la cartouche si l'eau traverse cette dernière.

25. Système permettant de respirer en circuit fermé selon la revendication 15, dans lequel l'absorbant de dioxyde de carbone (39) comprend un hydroxyde choisi parmi le groupe d'hydroxydes de métal des groupes IA et IIA.

26. Système permettant de respirer en circuit fermé selon la revendication 15, dans lequel l'absorbant de dioxyde de carbone(39) comprend de l'hydroxyde de calcium.

27. Système permettant de respirer en circuit fermé selon la revendication 15, dans lequel l'absorbant de dioxyde de carbone(39) comprend de l'hydroxyde de lithium.
